(19) Europäisches Patentamt
European Patent Office
Office européen des brevets

(11) Veröffentlichungsnummer: **0 071 732**
**B1**

(12) # EUROPÄISCHE PATENTSCHRIFT

(45) Veröffentlichungstag der Patentschrift: **13.08.86**

(51) Int. Cl.⁴: **C 01 G 3/05**

(21) Anmeldenummer: **82105565.4**

(22) Anmeldetag: **24.06.82**

(54) **Verfahren zur Herstellung von Kupfer(II)-chlorid aus Kupfer(II)-oxichlorid mit tertiären Aminhydrochloriden.**

(30) Priorität: **04.08.81 DE 3130810**

(43) Veröffentlichungstag der Anmeldung:
**16.02.83 Patentblatt 83/7**

(45) Bekanntmachung des Hinweises auf die Patenterteilung:
**13.08.86 Patentblatt 86/33**

(84) Benannte Vertragsstaaten:
**BE DE FR GB IT NL**

(56) Entgegenhaltungen:
**EP-A-0 013 586**
**DE-A-1 810 131**
**US-A-2 371 543**
**US-A-2 752 402**

(73) Patentinhaber: **HÜLS AKTIENGESELLSCHAFT, Patentabteilung / PB 15 - Postfach 13 20, D-4370 Marl 1 (DE)**

(72) Erfinder: **Coenen, Alfred, Dr., Altes Forsthaus, D-5471 Maria Laach (DE)**
Erfinder: **Prominski, Günter, Robert- Bunsen-Strasse 8, D-4370 Marl (DE)**
Erfinder: **Schröder, Manfred, Dr., Wolfener Strasse 1, D-4370 Marl (DE)**

**EP 0 071 732 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Es gibt eine Reihe von Möglichkeiten, um Kupfer(II)chlorid herzustellen. Das wasserfreie Salz ist beispielsweise durch Elektrolyse eines salzsauren Elektrolyten mit eine Kupferanode oder durch Chlorierung von metallischem Kupfer unter Luftausschluß bei 400 bis 500°C erhältlich.

Das Dihydrat kann beispielsweise durch doppelte Umsetzung von Kupfer(II)-sulfat mit Natriumchlorid entsprechend dem Verfahren der FR—A—754 184 hergestellt werden.

Von besonderem technischen Interesse sind die Verfahren, die von Kupfer(II)-oxichlorid ausgehen, das als Kupfererz weit verbreitet und technisch leicht zugänglich ist. Durch Einwirkung von wäßriger Salzsäure auf Kupfer(II)-oxichlorid gelangt man unmittelbar zum Kupfer(II)-chlorid.

Die Reaktion von Kupfer(II)-oxichlorid zu Kupfer(II)-chlorid stellt beispielsweise einen Teilschritt in der Oxichlorierung dar, die man zu diesem Zweck in zwei Teilschritte zerlegt. Man geht dabei so vor, daß man ein organisches Substrat, etwa Ethylen, mit Hilfe von Kupfer(II)-chlorid chloriert (1), das entstehende Kupfer(I)-chlorid mit Luftsauerstoff zum Kupfer(II)-oxichlorid oxidiert (2) und schließlich durch Umsetzung von Kupfer(II)-oxichlorid mit Chlorwasserstoff in Kupfer(II)-chlorid den Kreislauf des Kupfers schließt (3).

$$2\ CuCl_2 + CH_2{=}CH_2 \rightarrow Cl{-}CH_2{-}CH_2{-}Cl + 2\ CuCl \quad (1)$$

$$(2) \quad 2\ CuCl + \tfrac{1}{2}O_2 \rightarrow Cu_2OCl_2$$

$$(3) \quad Cu_2OCl_2 + 2\ HCl \rightarrow 2\ CuCl_2 + H_2O$$

Nachteilig ist, daß in diesem Prozeß hochprozentiger Chlorwasserstoff benötigt wird. Die bei vielen technischen Prozessen anfallenden verdünnten wäßrigen Salzsäuren sind nicht geeignet, weil die dann erhaltene Kupfer(II)chloridlösung eingedampft werden müßte.

Darüber hinaus ist es aus der EP—A 00 13 586 bekannt, das Hydrochlorid eines flüchtigen Amins als Chlorwasserstoffspender für die Synthese von Kupfer(II)-chlorid einzusetzen. Das Aminhydrochlorid wird mit Hilfe von Luft in Gegenwart von Kupfersalzen in das freie Amin überführt und gleichzeitig eine Übertragung des aus dem Chlorwasserstoff stammenden Chlors unter der katalytischen Wirkung von zugesetztem Jod auf das Olefin herbeigeführt. Das Verfahren hat folgende wesentliche Nachteile:

1. Das eingesetzte Amin fällt in Form eines stark verdünnten Gasgemisches an, so daß es vor seinem Wiedereinsatz zunächst aufkonzentriert werden muß.

2. Das Amin unterliegt bei der Oxidation des Chlorwasserstoffs und in Gegenwart von Jod oxidativen Zersetzungserscheinungen.

Aufgabe der vorliegenden Erfindung war es nun, ein Verfahren zu entwickeln, das es gestattet, die bei technischen Prozessen anfallenden Aminhydrochloride ohne Zusatz von Katalysatoren für die Darstellung von Kupfer(II)-chlorid so zu nutzen, daß nicht nur das Kupfer(II)-chlorid erhalten werden kann, sondern daß auch das aus den Aminhydrochloriden frei werdende Amin ohne zeit- und kostenaufwendigen Aufarbeitungsprozeß und ohne wesentliche Verluste wieder zurückgeführt werden kann.

Diese Aufgabe wurde dadurch gelöst, daß man das Verfahren zur Herstellung von Kupfer(II)-chlorid aus Kupfer(II)-oxichlorid vorzugsweise bei der Oxichlorierung in folgender Weise durchführt:

Man setzt eine wäßrige Aufschlämmung von Kupfer(II)-oxichlorid mit dem Hydrochlorid eines tertiären Amins in einem Kohlenwasserstoff als Lösemittel, vorzugsweise einem Kohlenwasserstoff mit 5 bis 20 C-Atomen, um. Die Eigenschaften des tertiären Amins gehen aus den Ansprüchen 1 und 2 hervor.

Die Erfindung betrifft ferner ein Verfahren gemäß Anspruch 3. Danach ist vorgesehen, die Amin/Lösemittel-Phase abzutrennen, zu dem verbleibenden Aminhydrochlorid nochmals reines Lösemittel zuzusetzen, die Gleichgewichtseinstellung abzuwarten und diese Schritte so oft zu wiederholen, bis sich das Kupfer(II)-oxichlorid quantitativ umgesetzt hat und sich keine zweite organische Phase mehr ausbildet.

Das in Form einer wäßrigen Aufschlämmung zur Reaktion gebrachte Kupfer(II)-oxichlorid, auch basisches Kupfer(II)-chlorid genannt, wird nach der IUPAC-Nomenklatur als Dikupferchloridtrihydroxid bezeichnet. Es kann z.B. durch Oxidation von Kupfer(I)-chlorid mit Luft erhalten werden. Weitere Herstellungsmethoden gehen aus der Literatur hervor [G. Brauer, Handbuch der Präparativen Anorganischen Chemie, 2. Band (1962), Seite 891; Kirk-Othmer, Encyclopedia of Chemical Technology, Second Edition, (1965), Volume 6, Seite 272].

Für das dunkel-gelblich-grüne, in kaltem Wasser unlösliche Pulver weden, auch aufgrund verschiedener möglicher Zusammensetzungen, mehrere, nebeneinander gleichrangige Formeln, wie $Cu_2OCl_2$, $CuCl_2 \cdot Cu(OH)_2$, $Cu(OH)Cl$, $[3\ Cu(OH)_2 \cdot CuCl_2]$ und $CuCl_2 \cdot 2\ CuO \cdot 4\ H_2O$, benutzt. In den Reaktionsgleichungen vorliegender Anmeldung wird—der Einfachheit halber—die Formel $Cu_2OCl_2$ verwendet.

Erfindungsgemäß eignen sich die Hydrochloride tertiärer Amine mit 12 bis 40 C-Atomen, die höchstens eine unmittelbar an den basischen Stickstoff gebundene Methylgruppe enthalten dürfen und deren Dissoziationskonstante $K_a$ der Gleichgewichtsreaktion

$$NR_3H^{\oplus} + H_2O \rightleftarrows NR_3 + H_3O^{\oplus}$$

zwischen $10^{-3.5}$ und $10^{-8.5}$ liegt.

Die Dissoziationskonstante $K_a$ zahlreicher tertiärer Amine ist der einschlägigen Literatur, z.B. Handbook of Chemistry and Physics, 57. Ed. (1967 bis 1977), Seite D, 147 ff, zu entnehmen.

In vorteilhafter Weise können folgende tertiäre Amine eingesetzt werden:

1. Trialkylamine mit 15 bis 36 C-Atomen, insbesondere tertiäre Alkylamine mit 3 verzweigten oder unverzweigten aliphatischen Seitenketten.

2. N-Alkylazacycloalkane der Formel

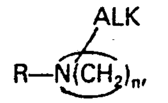

wobei R eine Alkylgruppe mit 6 bis 15 C-Atomen und $5 \leq n \leq 8$ ist, der Cyclus weiter alkylsubstituiert sein kann und das N-Alkylazacycloalkan insgesamt mindestens 15 C-Atome enthält, z.B. 1-Dodecyl-3.3.5-trimethylazacycloheptan.

3. N.N-Dialkylaniline, wobei die Alkylgruppen 6 bis 12 C-Atome aufweisen und der Benzolring durch niedere Alkylgruppen mit 1 bis 3 C-Atomen substituiert sein kann.

Die Hydrochloride derartiger Amine fallen beispielsweise bei der Extraktion von HCl aus verdünnter Salzsäure gemäß DE—C—26 33 640, bei der Umsetzung von Ammoniumchlorid mit Aminen zu Ammoniak und Aminhydrochloriden (vgl. DE—A—29 40 555) sowie bei der Umsetzung von Natriumchlorid, Kohlensäure und Amin zu Natriumbicarbonat und Aminhydrochlorid (vgl. DE—A—29 40 614) an.

Es wurde überraschenderweise gefunden, daß die Reaktion bei Verwendung von Kohlenwasserstoffen als Lösungsmitteln im gewünschten Sinne erfolgt. Bei Einsatz polarer Lösemittel sind die Ausbeuten wesentlich kleiner.

Für die Umsetzung der Aminhydrochloride mit der wäßrigen Aufschlämmung von Kupfer(II)-oxichlorid ist ein mit Wasser nicht oder kaum mischbares organisches Lösemittel erforderlich, das gegen Wasser, Chlorwasserstoff und Amine unter den gegebenen Reaktionsbedingungen beständig bzw. weitgehend beständig ist. Als Lösungsmittel sind insbesondere geradkettige oder verzweigte aliphatische und cycloaliphatische Kohlenwasserstoffe mit 6 bis 20 Kohlenstoffatomen sowie Gemische dieser Verbindungen geeignet. Besonders geeignet sind Hexan, Octan, Isooctan, Decan, Dodecan, Isododecan, Cyclohexan und Isopropylcyclohexan.

Das Gewichtsverhältnis von Aminhydrochlorid zu organischem Lösemittel liegt im allgemeinen in dem Bereich von 1:1 bis 1:20, vorzugsweise von 1:1 bis 1:5. Das optimale Verhältnis kann leicht durch orientierende Versuche ermittelt werden.

Im allgemeinen wird eine wäßrige Aufschlämmung von Kupfer(II)-oxichlorid eingesetzt, bei der das Gewichtsverhältnis von Wasser zu Kupfersalz im Bereich von 1:1 bis 50:1, vorzugsweise von 5:1 bis 25:1, liegt.

Da bei der Umsetzung manchmal 3, vielfach sogar 4 miteinander nicht mischbare Phasen (festes Kupfer(II)-oxichlorid, wäßrige Lösung, Aminhydrochlorid, organische Lösung) vorliegen, muß für innige Durchmischung, z.B. durch starkes Rühren, gesorgt werden.

Im allgemeinen führt man das erfindungsgemäße Verfahren bei Raumtemperatur (15 bis 30°C) durch, jedoch kann es zweckmäßig sein, die Umsetzung bei Temperaturen bis zu 100°C ablaufen zu lassen, da der Umsatz des Aminhydrochlorids im allgemeinen mit steigender Temperatur zunimmt.

Bei der Umsetzung der Aminhydrochloride mit Kupfer(II)-oxichlorid erhält man nicht immer einen vollständigen Umsatz zum freien Amin, sondern je nach Basizität der Aminkomponente und je nach Reaktionstemperatur führt die Umsetzung zu einem Gleichgewicht. Durch die Ausnutzung eines wesentlichen Vorteils des erfindungsgemäßen Verfahrens, der darin besteht, daß die einsetzbaren Aminhydrochloride zwar zu Beginn der Umsetzung mit der Aufschlämmung von Kupfer(II)-oxichlorid in den genannten organischen Lösemitteln gelöst sind, bei der Bildung von freiem Amin im allgemeinen daraus unter Ausbildung einer zweiten organischen Phase verdrängt werden, läßt sich jedoch das Gleichgewicht zur Seite des freien Amins hin verschieben. Zu diesem Zweck trennt man die Amin/Lösemittel-Phase ab und gibt zu dem verbleibenden Aminhydrochlorid nochmals reines Lösemittel hinzu. Diese Prozedur kann im Prinzip so oft wiederholt werden, bis sich keine zweite organische Phase mehr ausbildet und das Kupfer(II)-chlorid sich in quantitativer Ausbeute gebildet hat.

Beispiel 1

a) Herstellung von Kupfer(II)-oxichlorid

Eine wäßrige Kupfer(I)-chlorid-Lösung wird bei 80°C 5 Stunden unter Durchleiten von Luft oxidiert. Dabei fällt das ursprünglich als Kupfer(I)-chlorid vorliegende Kupfersalz (gemäß der Gleichung

$$6\,CuCl + \frac{3}{2} O_2 + 3\,H_2O \rightarrow [3\,Cu(OH)_2 \,.\, CuCl_2] + 2\,CuCl_2])$$

als unlösliches Kupfer(II)-oxichlorid aus. Nach Abzentrifugieren, Waschen und Trocknen erhält man das Kupfer(II)-oxichlorid.

b) Umsetzung des tert.-Aminhydrochlorids mit Kupfer(II)-oxichlorid

1.85 g (4.33 mmol) Kupfer(II)-oxichlorid der Formel $[3\,Cu(OH)_2 \,.\, CuCl_2]$ (=17.32 mmol Cu-Ionen) werden in 25 ml Wasser suspendiert und mit einer Lösung von 10.0 g (25.67 mmol) Tri - 2 - ethylhexylaminhydrochlorid in 40 ml Dodecan 2 Stunden bei Raumtemperatur kräftig verrührt. Nach kurzer Zeit hat sich das Kupfer(II)-oxichlorid unter Bildung von $CuCl_2$ im Wasser gelöst. Nach Phasentrennung wird der Gehalt an freiem Amin in der organischen Phase und der Kupfergehalt in der wäßrigen Phase analysiert. Amingehalt: 25.5 mmol (9.94 g); 99.3% Ausbeute) $Cu^{2+}$-Gehalt: 17.0 mmol (98.3% Ausbeute).

Beispiel 2

3.7 g (8.7 mmol) Kupfer(II)-oxichlorid werden in 30 ml Wasser suspendiert und mit einer Lösung von 10 g (25.7 mmol) Tri - n - octylaminhydrochlorid in 40 ml Dodecan bei 20°C eine Stunde lang kräftig gerührt. Beim Stehenlassen bilden sich außer einer wäßrigen zwei organische Phasen aus. Nach Abtrennen der wäßrigen Phase werden die organischen Phasen zwecks Bestimmung des Aminumsatzes durch Zugabe von 10 ml Toluol homogenisiert. Der Aminumsatz beträgt 45%; ebenso hoch ist der Umsatz von $Cu_2OCl_2$ zu $CuCl_2$. Die Wiederholung des Versuchs bei 50°C führt zu 50%, bei 75°C zu 58% und bei 100°C zu 61% Umsatz. Mit Hexan statt Dodecan als Lösemittel erhält man bei 20°C 50% Aminumsatz, mit Cyclohexan 49%.

Beispiele mit polaren Lösungsmitteln gehen aus der nachstehenden Tabelle hervor. Bei Verwendung dieser Lösungsmittel bildete sich stets nur eine organische Phase aus.

| Lösungsmittel | Ausbeute an Kupfer(II)-chlorid in % |
|---|---|
| Dibutylether | 37 |
| Toluol | 25 |
| Isopropanol | 10 |
| Methylenchlorid | 8 |
| Nitrobenzol | 6 |
| Ethylhexanol | 6 |
| Propylencarbonat | 6 |
| Benzonitril | 6 |
| Adipinsäuredinitril | 6 |
| Cyclohexanon | 5 |

Beispiel 3

3.7 g (8.66 mmol) Kupfer(II)-oxichlorid werden in 60 ml Wasser suspendiert und in einem zylinderförmigen Reaktionsgefäß mit einer Lösung von 20 g (51.3 mmol) Tri - n - octylaminhydrochlorid in 60 ml Hexan bei Raumtemperatur 1 Stunde verrührt. Neben der wäßrigen bilden sich zwei organische Phasen, deren leichtere eine Lösung von Tri-n-octylamin (5.37 g; 13.8 mmol) in Hexan darstellt, während die schwerere überwiegend aus nicht umgesetztem Tri - n - octylaminhydrochlorid besteht. Innerhalb von 3 Stunden läßt man langsam 350 ml Hexan von unten her in das gerührte Gemisch einlaufen und nimmt gleichzeitig am oberen Teil des Reaktionsgefäßes die Hexan/Amin-Phase laufend ab. Dabei verschwindet allmählich die Tri - n - octylaminhydrochlorid- Phase. Nach beendeter Reaktion werden die Hexanphasen auf ein Drittel ihres Volumens eingeengt und der Gehalt an Tri-n-octylamin bestimmt. Man erhält 17.88 g (45.9 mmol) Tri-n-octylamin. Ausbeute: 89.5%.

Beispiel 4

1.85 g (4.3 mmol) Kupfer(II)-oxichlorid (=17.3 mmol $Cu^{2+}$) werden in 30 ml Wasser suspendiert und mit einer Lösung von 11.1 g (25.7 mmol) Tri-isonoylaminhydrochlorid in 40 ml Dodecan 1 Stunde bei 50°C verrührt. Nach dem Stehenlassen bilden sich außer einer wäßrigen zwei organische Phasen aus, wobei die obere überwiegend aus freiem Amin in Dodecan, die untere überwiegend aus Aminhydrochlorid besteht. Zwecks analytischer Erfassung des Umsatzes werden die beiden organischen Phasen durch Zugabe von 20 ml Toluol homogenisiert. Man findet 5.18 g (13.1 mmol) Triisononylamin; Ausbeute: 51.0%. In der wäßrigen Phase sind 8.1 mmol $CuCl_2$ in gelöster Form vorhanden.

Beispiele 5 bis 14

Wie in dem Beispiel 4 beschrieben, werden die angeführten tertiären Aminhydrochloride mit basischem Kupferchlorid [3 $Cu(OH)_2$ . $CuCl_2$] umgesetzt. Angegeben wird der Umsatz von Kupfer(II)-oxichlorid zu Kupfer(II)-chlorid. Beispiel 13 wurde bei 75°C durchgeführt, alle anderen Beispiele bei 20°C.

| Beispiel | | |
|---|---|---|
| 5 | Tri-n-hexylamin | 39 |
| 6 | Tri-n-decylamin | 45 |
| 7 | Tri-n-dodecylamin | 40 |
| 8 | Tri-2-ethylbutylamin | 91 |
| 9 | N-octyl-piperidin | 20 |
| 10 | N-Octyl-3.3.5-tri-methyl-cycloazaheptan | 27 |
| 11 | $C_{12}/C_{13}$-Alkyl-3.3.5-tri-methylcycloazaheptan | 26 |
| 12 | N.N-Di-octyl-2.6-di-methylanilin | 81 |
| 13 | N.N-Di-octyl-2.6-di-methylanilin | 86 |
| 14 | N.N-Didecylanilin | 96 |

**Patentansprüche**

1. Verfahren zur Herstellung von Kupfer(II)-chlorid aus Kupfer(II)-oxichlorid, vorzugsweise bei der Oxichlorierung, dadurch gekennzeichnet, daß man

— eine wäßrige Aufschlämmung von Kupfer(II)-oxichlorid

— mit dem Hydrochlorid eines tertiären Amins
— in einem Kohlenwasserstoff umsetzt,
— wobei das tertiäre Amin

1. insgesamt 12 bis 40 C-atome aufweist,
2. höchstens eine unmittelbar an den Stickstoff gebundene Methylgruppe enthalten darf und
3. die Dissoziationskonstante $K_a$ der Gleichgewichtsreaktion

$$NR_3H^{\oplus}+H_2O \rightleftarrows NR_3+H_3O^{\oplus}$$

zwischen $10^{-3,5}$ und $10^{-8,5}$ liegt.

2. Verfahren zur Herstellung von Kupfer(II)-chlorid nach Anspruch 1, dadurch gekennzeichnet, daß man als tertiäres Amin

1. Trialkylamine mit 15 bis 36 C-Atomen oder
2. N-Alkylazacycloalkane der Formel

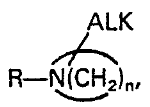

wobei R eine Alkylgruppe mit 6 bis 15 C-Atomen und 5≤n≤8 ist, der Cyclus weiter alkylsubstituiert sein kann und das N-Alkylazacycloalkan insgesamt mindestens 15 C-Atome enthält.
3. N.N-Dialkylaniline, wobei die Alkylgruppen 6 bis 12 C-Atome aufweisen und der Benzolring durch eine oder mehrere Alkylgruppen mit ein bis drei C-Atomen substiuiert sein kann,

einsetzt.

3. Verfahren zur Herstellung von Kupfer(II)-chlorid nach Anspruch 1, dadurch gekennzeichnet, daß man die Amin/Lösemittel-Phase abtrennt, zu dem verbleibenden Aminhydrochlorid nochmals reines Lösemittel zusetzt, die Gleichgewichtseinstellung abwartet und diese Schritte so oft wiederholt, bis sich das Kupfer(II)-oxichlorid quantitativ umgesetzt hat und sich keine zweite organische Phase mehr ausbildet.

4. Verfahren zur Herstellung von Kupfer(II)-chlorid nach Anspruch 1, dadurch gekennzeichnet, daß man als Lösungsmittel Kohlenwasserstoffe mit 5 bis 20 C-Atomen einsetzt.

**Revendications**

1. Procédé de préparation de chlorure de cuivre-(II) à partir d'oxychlorure de cuivre-(II), de préférence lors de l'oxychloration, caractérisé par le fait que l'on fait réagir

— une suspension aqueuse d'oxychlorure de cuivre-(II)
— sur le chlorhydrate d'une amine tertiaire
— dans un hydrocarbure,
— tandis que l'amine tertiaire

1. présente au total de 12 à 40 atomes de carbone,
2. doit renfermer au plus un groupe méthyle directement lié à l'azote et que
3. la constante de dissociation $K_a$ de la réaction d'équilibre

$$NR_3H^{\oplus}+H_2O \rightleftarrows NR_3+H_3O^{\oplus}$$

se situe entre $10^{-3,5}$ et $10^{-8,5}$.

2. Procédé de préparation de chlorure de cuivre-(II) selon la revendication 1, caractérisé par le fait qu'on utilise, comme amine tertiaire,

1. des tri-alkylamines comportant de 15 à 36 atomes de carbone, ou
2. des N-alkyl-aza-cyclo-alkanes de formule

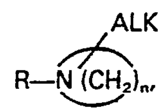

dans laquelle R est un groupe alkyle comportant de 6 à 15 atomes de carbone et *n* est supérieur ou égal à 5 et en même temps inférieur ou égal à 8, le cycle pouvant être davantage substitué par des radicaux alkyle et le n-alkyl-aza-cyclo-alcane renfermant au total au moins 15 atomes de carbone.
3. des N,N-dialkyl-anilines, dans lesquelles les groupes alkyle présentent de 6 à 12 atomes de carbone et le noyau benzénique peut être substitué par un ou plusieurs groupes alkyle comportant de 1 à 3 atomes de carbone.

3. Procédé de préparation de chlorure de cuivre-(II) selon la revendication 1, caractérisé par le fait qu'on sépare la phase amine/solvant, qu'on ajoute à nouveau du solvant pur au chlorhydrate d'amine qui reste, qu'on attend l'établissement de l'équilibre et que l'on répète ces stades aussi souvent que nécessaire pour que l'oxychlorure de cuivre-(II) se soit converti quantitativement et qu'il ne se forme plus de seconde phase organique.

4. Procédé de préparation de chlorure de cuivre-(II) selon la revendication 1, caractérisé par le fait qu'on utilise comme solvant des hydrocarbures comportant de 5 à 20 atomes de carbone.

**Claims**

1. A process for the production of copper (II) chloride from copper (II) oxychloride, preferably produced by oxychlorination, characterised in that

— an aqueous suspension of copper (II) oxychloride
— is reacted in a hydrocarbon as solvent
— with the hydrochloride of a tertiary amine,
— the tertiary amine

1) having a total of 12 to 40 carbon atoms,
2) containing at most one methyl group directly linked to the nitrogen atom, and
3) possessing a dissociation constant $K_a$ for the equilibrium reaction

$$NR_3H^{\oplus} + H_2O \rightleftarrows NR_3 + H_3O^{\oplus}$$

of from $10^{-3.5}$ to $10^{-8.5}$.

2. A process for the production of copper (II) chloride according to claim 1, characterised in that there is used as tertiary amine

1) a trialkylamine of 15 to 36 carbon atoms, or

2) an N-alkylazacycloalkane of the formula

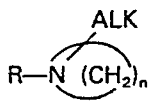

where R is an alkyl group of 6 to 15 carbon atoms and $5 \leq n \leq 8$, the ring can be further substituted by alkyl and the N-alkylazacycloalkane has a total of at least 15 carbon atoms, or

3) an N,N-dialkylaniline, the alkyl groups having 6 to 12 carbon atoms and the benzene ring being optionally substituted by one or more alkyl groups of 1 to 3 carbon atoms.

3. A process for the production of copper (II) chloride according to claim 1, characterised in that the amine/solvent phase is separated off, pure solvent is added again to the residual amine hydrochloride, the equilibrium position is waited for, and these steps are repeated often enough until the copper (II) oxychloride has reacted quantitatively and no second organic phase is formed any more.

4. A process for the production of copper (II) chloride according to claim 1, characterised in that a hydrocarbon of 5 to 12 carbon atoms is used as solvent.